# EUROPEAN PATENT APPLICATION

(11) **EP 2 500 315 A1**
(43) Date of publication of application: **19.09.2012**
(21) Application number: 10829707.8
(22) Date of filing: 10.11.2010
(51) Int. Cl.: C01B 3/32

(54) **METHOD FOR PRODUCING AQUEOUS GAS**

(30) Priority: 12.11.2009 JP 2009259139
(71) Applicant: Kao Corporation, Chuo-Ku Tokyo 103-8210 (JP)
(72) Inventor: AMISHIGE, Yasuo, Wakayama-shi Wakayama 640-8580 (JP); SHIRASAWA, Takeshi, Wakayama-shi Wakayama 640-8580 (JP)
(74) Representative: HOFFMANN EITLE
(86) International application number: PCT/JP2010/006611
(87) International publication number: WO 2011/058746

(57) **Abstract**

In a method for producing water gas, a reaction fluid containing polyhydric alcohol and water is caused to flow in a reaction zone (14a) provided with a catalyst (18) having a surface extending in a flow direction of the reaction fluid, at an average flow velocity of 0.05 m/s or more in a reaction time of 1.0 second or more.

## Description

### TECHNICAL FIELD

The present disclosure relates to methods for producing water gas from polyhydric alcohol and water.

### BACKGROUND ART

It is known that glycerin as a by-product of a process of producing biodiesel, which is an alternative fuel derived from plants, is converted into hydrogen by steam reforming (see, for example, Patent Documents 1 and 2). Such glycerin is a safe material, and thus, has attracted attention as a useful energy source for a hydrogen fuel.

However, reaction of generating hydrogen from glycerin is accompanied by side reaction of soot (carbon) generation. When the soot is attached to a catalyst surface, catalyst activity might degrade, thereby causing adverse effects on reaction such as reduction of yield in some cases. In addition to the adverse effects on reaction, accumulation of soot might cause adverse effects on operation such as blockage of a reaction device or decrease in heat transmission efficiency leading to difficulty in temperature control in a reaction zone. If this situation continues, destruction of the reaction device, e.g., breakage of a tube, is expected to occur.

In view of the above problems, Patent Document 3 shows a technique for reducing soot generation in which a fluid material containing polyhydric alcohol, water, and hydrogen is fed to a reaction zone provided with a catalyst and caused to flow therein, thereby causing reaction of the fluid material to generate water gas. Patent Document 4 shows a technique in which a fluid material containing polyhydric alcohol, water, and carbon dioxide is fed to a reaction zone provided with a catalyst and caused to flow therein, thereby causing reaction of the fluid material to generate water gas.

These Patent Documents, however, do not show sufficient studies on how the flow velocity and the reaction time of the fluid material affect suppression of soot.

### CITATION LIST

### PATENT DOCUMENT

[Patent Document 1] International Patent Publication No. WO2007/114438
[Patent Document 2] Japanese Patent Publication No. 2009-13041
[Patent Document 3] Japanese Patent Publication No. 2009-51703
[Patent Document 4] Japanese Patent Publication No. 2009-51704

### SUMMARY OF THE INVENTION

The present disclosure relates to a method for producing water gas from polyhydric alcohol and water. In this method, a reaction fluid containing polyhydric alcohol and water is caused to flow in a reaction zone provided with a catalyst having a surface extending in a flow direction of the reaction fluid, at an average flow velocity of 0.05 m/s or more in a reaction time of 1.0 second or more.

### BRIEF DESCRIPTION OF THE DRAWINGS

[FIG. 1] FIG. 1 is a block diagram showing a configuration of a reaction device.
[FIG. 2] FIGS. 2(a) to 2(f) are cross-sectional views illustrating examples of a reactor.

### DESCRIPTION OF EMBODIMENTS

An embodiment will be described in detail hereinafter.

### (Reaction device)

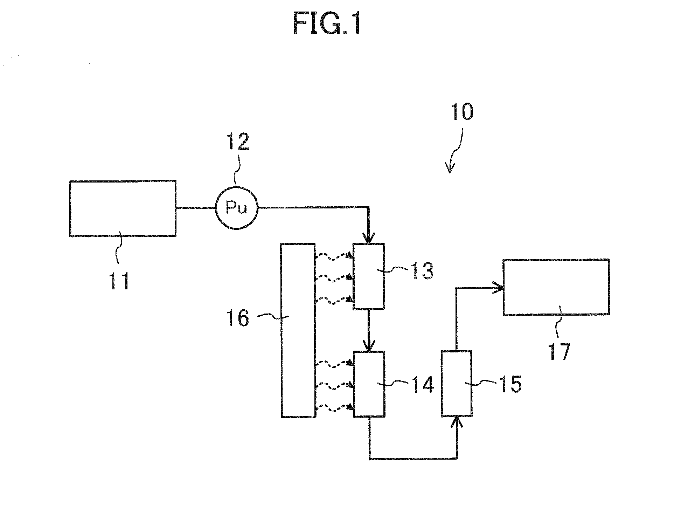

FIG. 1 illustrates a reaction device 10 for use in producing water gas according to this embodiment.

The reaction device 10 is a continuous type device capable of continuously producing water gas as a reaction product, and includes a pipe extending from a material feeding part 11, which is a source of a water gas material, to a product collecting part 17. From the upstream to the downstream of the pipe, a material feeding pump 12, a preheater 13, a reactor 14, and a cooler 15 are arranged in this order at intervals, and are connected in series. A heater 16 is provided to heat the preheater 13 and the reactor 14. A pressure regulator (not shown) is provided upstream of the product collecting part 17.

The material feeding part 11 may be, for example, a liquid reservoir. The material feeding part 11 preferably has a temperature adjusting mechanism and a stirring mechanism.

Examples of the material feeding pump 12 include a centrifugal pump, a diffuser pump, a centrifugal mixed flow pump, a mixed flow pump, an axial flow pump, a gear pump, a screw pump, a cam pump, a vane pump, a piston pump, a plunger pump, a diaphragm pump, a vortex pump, a viscosity pump, an air-lift pump, a jet pump, an electromagnetic pump. Among them, those which produce less pulsating flow are preferable. This is because when a water gas fluid material is distributed to a passage without the pulsating flow, uniform and stable flow can be kept in every part of the passage, and mixing occurs stably. This is advantageous in that reaction occurs without problems, and the reaction occurs stoichiometrically with desired reactivity and high selectivity. The water gas fluid material may be fed to the preheater 13 by using differential pressure, in place of using the material feeding pump 12.

The preheater 13 is in the shape of a pipe, for example, and includes an inlet, an outlet, and a preheating passage provided between the inlet and the outlet.

The reactor 14 is in the shape of a pipe, for example, and includes an inlet, an outlet, and a reaction zone 14a (a reaction passage) provided between the inlet and the outlet.

The reaction zone 14a of the reactor 14 may be a reaction passage formed in such a manner that a member having a groove formed in its surface by, for example, cutting is brought into close contact with another member. The reaction zone 14a may also be a reaction passage in an existing pipe such as a square pipe or a circular pipe.

When viewed in cross section, the reaction zone 14a may be in the shape of a circle, a semicircle, an ellipse, a semiellipse, a square, a rectangle, a trapezoid, or a parallelogram, or may be indefinite in shape, for example. In a longitudinal direction from the inlet to the outlet, the reaction zone 14a may be linear, round, serpentine, or spiral, for example.

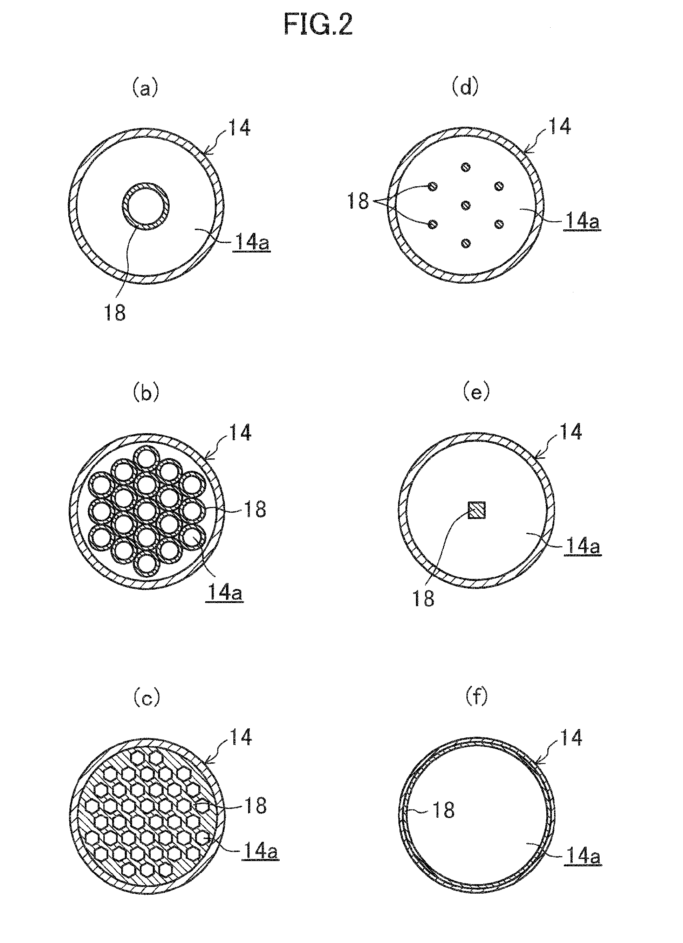

FIGS. 2(a) to 2(f) illustrate cross sections of examples of the reactor 14.

A catalyst 18 is provided in the reaction zone 14a in the reactor 14.

The catalyst 18 may be a metal which is generally used for steam reforming of polyhydric alcohol and water. In particular, Group 8-12 metals, preferably Group 8-10 metals, may suitably be used from an industrial view. Examples of such metal include iron, cobalt, nickel, copper, zinc, ruthenium, rhodium, palladium, osmium, iridium, and platinum. Among them, the Group 8-10 metals are preferable because they are industrially cost-effective, easily available, and safe. In particular, nickel, ruthenium, palladium, and platinum are more preferable. The catalyst 18 metal may formed by having the metal deposited on a support to increase a surface area, and to provide mechanical strength and improved catalyst performance. In this case, the support may be, for example, silica, alumina, silica alumina, titania, zirconia, diatomaceous earth, or activated carbon. The catalysts may be used in combination, or may be surface-treated in advance by reduction using, for example, hydrogen, or oxidation, for example, using oxygen or air to control the reduction-oxidation state of their surfaces.

The catalyst 18 has a surface extending in the direction of flow of the fluid. This catalyst 18 may be, for example, a cylindrical structure such as a metal tube or a bundle of metal tubes, a honeycomb structure, a linear structure such as a metal wire, a bundle of wires, or a strand, a narrow structure such as a plate, or an inner wall of the reaction passage in the reaction device 10.

As illustrated in FIGS. 2(a) and 2(b), in the case where the catalyst 18 is the cylindrical structure, the catalyst 18 is inserted in the reaction zone 14a, and the inner surface and the outer surface of this catalyst 18 correspond to the surface extending in the flow direction.

As illustrated in FIG. 2(c), in the case where the catalyst 18 is the honeycomb structure, the catalyst 18 is located in the reaction zone 14a, and the inner wall surface of the hole of this catalyst 18 corresponds to the surface extending in the flow direction.

As illustrated in FIG. 2(d), in the case where the catalyst 18 is the linear structure, the catalyst 18 is inserted in the reaction zone 14a, and the outer surface of this catalyst 18 corresponds to the surface extending in the flow direction. The catalyst 18 of the linear structure may be inserted in the reaction zone 14a in such a manner that the catalyst 18 has a spiral pattern extending in the flow direction.

As illustrated in FIG. 2(e), in the case where the catalyst 18 is the narrow structure, the catalyst 18 is inserted in the reaction zone 14a, and the outer surface of this catalyst 18 corresponds to the surface extending in the flow direction.

As illustrated in FIG. 2(f), in the case where the catalyst 18 is the inner wall of the reaction zone 14a, a catalytic metal is used as a metal constituting the inner wall of the reaction zone 14a. Alternatively, the inner wall of the reaction zone 14a may be constituted at some later time by a catalyst through plating, sputtering, or coating and drying. In this case, the inner wall surface thereof corresponds to the surface extending in the flow direction.

The catalyst 18 may continuously extend in the flow direction or may be made of a plurality of parts discontinuously arranged in the flow direction. When the flow becomes turbulent, the flow direction varies over time, and is not fixed. In this case, the flow direction designates a direction which is averaged over time.

The catalyst 18 may be provided in every part of the reaction zone 14a from the inlet to the outlet of the reaction device 10, or in only part of the reaction zone 14a.

The passage diameter of the reaction zone 14a in the reactor 14 is preferably 10 to 5000 mm, both inclusive, more preferably 15 to 3000 mm, both inclusive, and much more preferably 20 to 1000 mm, both inclusive. The passage length of the reaction zone 14a is preferably 100 to 100000 mm (0.1 to 100 m), more preferably 100 to 10000 mm (0.1 to 10 m), and much more preferably 500 to 4000 mm (0.5 to 4 m). The passage length of the reaction zone 14a is preferably 500 to 100000 mm (0.5 to 100 m). The effective passage cross-sectional area except for the area occupied by the catalyst is preferably 100 to 25000000 mm², more preferably 200 to 25000000 mm², much more preferably 200 to 9000000 mm², and still much more preferably 400 to 1000000 mm². The volume of the reaction zone 14a in the reactor 14 is preferably 0.01 to 2500000 L, more preferably 0.01 to 250000 L, and much more preferably 0.2 to 4000 L. The surface area of the catalyst 18 is preferably 40 to 10000000 cm², and more preferably 400 to 800000 cm². The value obtained by dividing the surface area of the catalyst 18 by the volume of the reaction zone 14a in the reactor 14 is preferably 0.01 to 120 cm²/cm³, and more preferably 1 to 50 cm²/cm³.

The cooler 15 is in the shape of a pipe, for example, and has an inlet, an outlet, and a cooling passage provided between the inlet and the outlet. The cooler 15 may be an air-cooling cooler, or a water-cooling cooler.

The heater 16 may be a heater which allows heat exchange between the fluid and a heating medium such as hot oil or steam, a heater which heats the fluid through contact with, or radiation from, a heat generator such as an electric heater, or a heater using a heat pump, for example.

The product collecting part 17 may be, for example, a gas reservoir.

### (Water gas material)

A water gas material for use in production of water gas according to this embodiment contains polyhydric alcohol and water.

Examples of polyhydric alcohol include dihydric alcohols such as ethylene diglycol, 1,2-propanediol, 1,3-propanediol, 2,3-hydroxypropanal, 1,2-butanediol, 1,3-butanediol, 1,4-butanediol, and tartaric acid, trihydric alcohols such as glycerin, 1,2,4-butanetriol, and 1,2,6-hexanetriol, and tetrahydric alcohols such as pentaerythritol. Among them, dihydric or trihydric alcohols are preferable, and ethylene diglycol and glycerin are particularly preferable in view of yield of the produced water gas, and biological safety thereof. One type of polyhydric alcohols may be used alone, or two or more types of them may be used in a mixed state.

Water herein may be, for example, distilled water or deionized water.

The content of water is preferably 0.3 to 10, more preferably 1 to 6, in molar ratio relative to carbon atoms contained in polyhydric alcohol. For example, when polyhydric alcohol is glycerin, the content of water is preferably 0.9 to 30, more preferably 3 to 18, in molar ratio.

The water gas material may further contain monohydric alcohols (methanol, ethanol, etc.), hydrocarbons (methane, ethane, etc.), ethers (dimethyl ether, diethyl ether, etc.), aldehydes (formaldehyde, acetaldehyde, etc.), for example, as long as reactivity of the material is not impaired.

### (Method for producing water gas)

A method for producing water gas using the reaction device 10 and the water gas material according to this embodiment will be described.

A method for producing water gas according to this embodiment uses the reaction device 10 described above. The water gas material is placed in the material feeding part 11. Then, the material feeding pump 12 and a heater 16 are operated to feed a reaction fluid of the water gas material from the material feeding part 11 to the preheater 13 through the material feeding pump 12, to preheat the reaction fluid by the preheater 13 heated by the heater 16, and to feed the preheated fluid to the reactor 14. The reaction fluid is steam-reformed in the reactor 14 to produce water gas. The reaction fluid which contains the water gas produced in the reactor 14 is fed to the cooler 15, and is cooled to be condensed. Then, the reaction fluid containing the water gas from the cooler 15 is collected in the product collecting part 17.

Specifically, the reaction fluid of the water gas material is steam-reformed through a decomposition reaction of polyhydric alcohol based on the following reaction formula (1) to produce the water gas, which is a mixed gas of hydrogen and carbon monoxide. In addition, the produced carbon monoxide reacts with water through a water-gas shift reaction of the water gas based on the following reaction formula (2) to secondarily produce hydrogen.

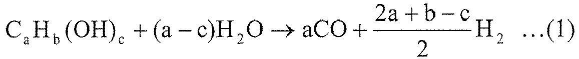

CO + H₂O ⇄ CO₂ + H₂ (2)

The preheater 13 preferably preheats the reaction fluid to 200 to 1000°C, and more preferably to 500 to 700°C. The preheat temperature can be adjusted by controlling the heating temperature of the heater 16.

In the reactor 14, the flow rate of the reaction fluid in terms of liquid volume is preferably 10 to 100000 mL/h of, more preferably 100 to 50000 mL/h, and much more preferably 1000 to 10000 mL/h, depending on the size of the reactor 14. This flow rate can be adjusted by controlling the feeding speed of the water gas material by the material feeding pump 12.

The average flow velocity of the reaction fluid is 0.05 m/s or more, preferably 0.05 to 5 m/s, and more preferably 0.1 to 1 m/s. The average flow velocity can also be adjusted by controlling the feeding speed of the water gas material by the material feeding pump 12. The average flow velocity of the reaction fluid can be obtained in the following manner. First, a value obtained by multiplying the total number of moles of the water gas material per a unit time by 0.0224 is divided by an effective passage cross-sectional area of the reaction zone 14a in the reactor 14 except for the area occupied by the catalyst. Then, the obtained value is multiplied by a value obtained by dividing an absolute temperature [K] of the reaction zone 14a by an absolute temperature [K] under standard conditions. Here, the water gas material is polyhydric alcohol and water, and the average flow velocity means the average flow velocity at the reactor inlet.

The reaction time is 1.0 s (second) or more, and is preferably 1.5 s or more, and more preferably 2.0 s or more, in order to obtain a sufficient reactivity. In view of cost efficiency, the reaction time is preferably 10 min (minutes) or less, more preferably 5 min or less, and much more preferably 1 min or less. The reaction time (s) is a value obtained by dividing the passage length (mm) of the reactor by the average flow velocity (mm/s) of the reaction fluid. This reaction time can be adjusted by controlling the feeding speed of the water gas material by the material feeding pump 12 according to the volume of the reactor 14.

The reaction temperature is preferably 200 to 1000°C, more preferably 400 to 800°C, and much more preferably 500 to 700°C. The reaction temperature can be adjusted by controlling the heating temperature of the heater 16.

The reaction pressure is preferably 0.01 to 10 MPa, and more preferably 0.1 to 1 MPa. The reaction pressure can be adjusted by controlling the pressure with the pressure regulator.

A steam ratio S/C (a molar ratio of water to the whole number of carbon atoms) in the reactor 14 is preferably 0.3 to 10, and more preferably 1 to 6.

The Reynolds number of the reaction fluid in the reactor 14 is preferably 5 or more, more preferably 10 or more, much more preferably 15 or more, and still much more preferably 20 or more, in order to reduce generation of soot in the reactor. In view of cost efficiency, the Reynolds number is preferably 100000 or less, more preferably 10000 or less, much more preferably 1000 or less, and still much more preferably 100 or less. The Reynolds number of the reaction fluid means the Reynolds number of the reaction fluid at the reactor inlet.

The reaction fluid in the reactor 14 may be in a liquid phase, a gas phase, a supercritical fluid phase, or a mixed phase of these phases. The phase of the reaction fluid can be adjusted by controlling the temperature in the reaction device 10 with the heater 16, and controlling the pressure in the reaction device 10 with the pressure regulator.

The cooler 15 preferably cools the generated reaction fluid to 0 to 100°C, and more preferably to 10 to 40°C. The target temperature can be adjusted by selecting the type or the structure of the cooler 15.

The collected water gas is purified to required quality depending on for which the water gas is used, such as fuel cells, hydrogen fuel, or chemical materials. The purification may be performed using a gas-permeable film or PSA, for example.

According to the method for producing water gas according to the foregoing embodiment, the reaction fluid containing polyhydric alcohol and water is caused to flow in the reaction zone 14a provided with the catalyst 18 having the surface extending in the direction of flow of the reaction fluid at an average flow velocity of 0.05 m/s or more in a reaction time of 1.0 s or more. In this manner, generation of soot in producing water gas can be reduced.

In the method for producing water gas of this embodiment, the fluid material of the water gas material containing polyhydric alcohol and water is introduced into the reactor 14. However, the present disclosure is not limited to this example, and polyhydric alcohol and water (stream) may be separately introduced into the reactor.

In addition, a material except for polyhydric alcohol, hydroxy carboxylic acid, and water may be added to the reactor 14 as long as the added material does not adversely affect the reactivity and yield. Examples of such a material includes gases such as hydrogen, carbon dioxide, nitrogen, argon, helium, oxygen, organic materials such as organic acid, hydrocarbon, alcohol, and aldehyde, salts thereof, and inorganic salts.

### [Examples]

### (Production of water gas)

Water gases of Examples 1 and 2 and Comparative Examples 1 to 5 below were produced. Compositions of these gases are also shown in Table 1.

### <Example 1>

In a reaction device used in Example 1, a nickel catalyst pipe with an outer diameter of 9.5 mm, an inner diameter of 7.5 mm, and a length of 1000 mm was placed in a reactor made of nickel-based materials having a circular-pipe passage with a passage diameter of 26.6 mm (an effective passage cross-sectional area of 529 mm²) and a passage length of 1000 mm (1m).

A pretreatment was performed by raising the temperature in the reaction device to 600°C, and keeping the temperature at 600°C for one hour, while distributing hydrogen in the reaction device.

Then, using the reaction device after the pretreatment, a mixed solution of 3622 g of glycerin (Kishida Chemical Co., Ltd., special grade) and 6378 g of distilled water (Wako Pure Chemical Industries, Ltd.) was prepared and supplied to a preheater at a flow rate of 73.5 mL/h. Thereafter, the reaction fluid which has changed into a gas by increasing the temperature therein was supplied to the reactor. At this time, in the reactor, the reaction temperature was set at 600°C and the reaction pressure (the absolute pressure) was set at 0.1 MPa. The average flow velocity was 0.09 m/s, the reaction time was 10.6 s, the stream ratio S/C was 3, and the Reynolds number was 23.0.

The fluid released from the reactor was cooled, and collected in a Tedler bag.

### <Example 2>

The same operation as in Example 1 was performed except that the flow rate of the material solution was 191.9 mL/h. Then, the fluid released from the reactor was cooled, and collected in a Tedler bag. The average flow velocity was 0.25 m/s, the reaction time was 4.1 s, the stream ratio S/C was 3, and the Reynolds number was 60.0.

### <Comparative Example 1>

A reaction device used in Comparative Example 1 had a structure similar to that of the reaction device of Example 1, and included a reactor of nickel (nickel purity > 99.0%) having a circular-pipe passage with a passage diameter of 7.5 mm (an effective passage cross-sectional area of 44.2mm²) and a passage length of 200 mm (0.2m). In this reaction device, the inner wall of the reactor constituted a catalyst.

A pretreatment was performed by raising the temperature in the reaction device to 600°C, and keeping the temperature at 600°C for one hour, while distributing hydrogen in the reaction device.

Then, using the reaction device after the pretreatment, a mixed solution of 108.7 g of glycerin and 191.3 g of distilled water was prepared and supplied to a preheater at a flow rate of 1.3 mL/h. Thereafter, the reaction fluid which has changed into a gas by increasing the temperature therein was supplied to the reactor. At this time, in the reactor, the reaction temperature was set at 600°C and the reaction pressure (the absolute pressure) was set at 0.1 MPa. The average flow velocity was 0.02 m/s, the reaction time was 9.6 s, the stream ratio S/C was 3, and the Reynolds number was 1.4.

The fluid released from the reactor was cooled, and collected in a Tedler bag.

### <Comparative Example 2>

A reaction device used in Comparative Example 2 had a structure similar to that of the reaction device of Example 1, and included a reactor of nickel (nickel purity > 99.0%) having a circular-pipe passage with a passage diameter of 4.4 mm (an effective passage cross-sectional area of 15.2 mm²) and a passage length of 100 mm (0.1 m). In this reaction device, the inner wall of the reactor constituted a catalyst.

A pretreatment was performed by raising the temperature in the reaction device to 600°C, and keeping the temperature at 600°C for one hour, while distributing hydrogen in the reaction device.

Then, using the reaction device after the pretreatment, a mixed solution of 108.7 g of glycerin and 191.3 g of distilled water was prepared and supplied to a preheater at a flow rate of 0.9 mL/h. Thereafter, the reaction fluid which has changed into a gas by increasing the temperature therein was supplied to the reactor. At this time, in the reactor, the reaction temperature was set at 600°C and the reaction pressure was set at 0.1 MPa (the absolute pressure). The average flow velocity was 0.04 m/s, the reaction time was 2.4 s, the stream ratio S/C was 3, and the Reynolds number was 1.7.

The fluid released from the reactor was cooled, and collected in a Tedler bag.

### <Comparative Example 3>

The same operation as in Comparative Example 2 was performed except that the flow rate of the material solution was 0.4 mL/h. Then, the fluid released from the reactor was cooled, and collected in a Tedler bag. The average flow velocity was 0.02 m/s, the reaction time was 4.8 s, the stream ratio S/C was 3, and the Reynolds number was 0.8.

### <Comparative Example 4>

A reaction device used in Comparative Example 4 had a structure similar to that of the reaction device of Example 1, and included a reactor of nickel (nickel purity > 99.0%) having a circular-pipe passage with a passage diameter of 2.2 mm (an effective passage cross-sectional area of 3.8 mm²) and a passage length of 2000 mm (2 m). In this reaction device, the inner wall of the reactor constituted a catalyst. In this reaction device, a mixed solution was prepared and supplied to a preheater at a flow rate of 15.6 mL/h. Thereafter, the reaction fluid which has changed into a gas by increasing the temperature therein was supplied to the reactor. At this time, in the reactor, the reaction temperature was set at 600°C and the reaction pressure was set at 0.1 MPa (the absolute pressure). The average flow velocity was 3.00 m/s, the reaction time was 0.7 s, the stream ratio S/C was 3, and the Reynolds number was 59.7.

The fluid released from the reactor was cooled, and collected in a Tedler bag.

### <Comparative Example 5>

The same operation as in Comparative Example 4 was performed except that the flow rate of the material solution was 31.2 mL/h. Then, the fluid released from the reactor was cooled, and collected in a Tedler bag. The average flow velocity was 6.00 m/s, the reaction time was 0.3 s, the stream ratio S/C was 3, and the Reynolds number was 119.4.

**[Table 1]**

| | Passage diameter mm | Passage length mm (m) | Effective passage cross-sectional area mm² | Material flow rate mL/h | Average Flow velocity m/s | Reaction time s | Steam ratio S/C | Reynolds number |
|---|---|---|---|---|---|---|---|---|
| Example 1 | 26.6 | 1000 (1) | 529 | 73.5 | 0.09 | 10.6 | 3 | 23.0 |
| Example 2 | 26.6 | 1000 (1) | 529 | 191.9 | 0.25 | 4.1 | 3 | 60.0 |
| Comparative Example 1 | 7.5 | 200 (0.2) | 44.2 | 1.3 | 0.02 | 9.6 | 3 | 1.4 |
| Comparative Example 2 | 4.4 | 100 (0.1) | 15.2 | 0.9 | 0.04 | 2.4 | 3 | 1.7 |
| Comparative Example 3 | 4.4 | 100 (0.1) | 15.2 | 0.4 | 0.02 | 4.8 | 3 | 0.8 |
| Comparative Example 4 | 2.2 | 2000 (2) | 3.8 | 15.6 | 3.00 | 0.7 | 3 | 59.7 |
| Comparative Example 5 | 2.2 | 2000 (2) | 3.8 | 31.2 | 6.00 | 0.3 | 3 | 119.4 |

### (Evaluation Test)

### <Consumption ratio>

Liquid contained in each of the collected reaction fluids of Examples 1 and 2 and Comparative Examples 1 to 5 was analyzed by gas chromatography to quantify the concentration of the unreacted material. The amount of the unreacted material was calculated by multiplying the concentration and the amount of the collected liquid. A consumption ratio was calculated by subtracting a percentage of the unreacted material relative to the total amount of the fed material for gas from 100%.

### <Water gas yield>

Gas contained in each of the collected reaction fluid of Examples 1 and 2 and Comparative Examples 1 to 5 was analyzed by gas chromatography to quantify the component concentrations (vol %) of H₂, CO, CO₂, and CH₄. The amount of released water gas as a sum of hydrogen and carbon monoxide obtained by multiplying the above concentration and the amount of collected gas. Then, the ratio of an actual yield to water gas theoretically obtained from the amount of the fed reaction material was defined as a water gas yield. In theory, the number of moles of water gas which can be generated from one mole of glycerin is 7.

### <Carbon (soot) generation ratio >

Liquid contained in each of the collected reaction fluids of Examples 1 and 2 and Comparative Examples 1 to 5 was analyzed by gas chromatography to quantify the unreacted material and the reaction product, thereby calculating the numbers of moles. Then, the number of moles in each component was converted into the number of moles of carbon atoms included in the component, and the numbers of moles in the components were summed up. Thereafter, a carbon generation ratio was calculated by subtracting a percentage of the total number of moles of carbon atoms relative to the amount of the fed the reaction material converted into the number of moles of carbon atoms from 100%.

### (Results of evaluation test)

Table 2 shows results of the evaluation test.

**[Table 2]**

| | Consumption ratio % | Water gas yield % | Carbon generation ratio % | H₂ vol% | CO vol% | CO₂ vol% | CH₄ vol% |
|---|---|---|---|---|---|---|---|
| Example 1 | 100 | 97.3 | 0.5 | 65.0 | 14.8 | 19.6 | 0.6 |
| Example 2 | 100 | 92.3 | 0.7 | 63.2 | 16.6 | 18.9 | 1.2 |
| Comparative Example 1 | 100 | 90.1 | 7.6 | 67.8 | 8.7 | 22.3 | 1.2 |
| Comparative Example 2 | 100 | 90.2 | 5.9 | 63.8 | 17.4 | 17.7 | 1.1 |
| Comparative Example 3 | 100 | 61.3 | 4.7 | 56.6 | 15.1 | 25.6 | 2.7 |
| Comparative Example 4 | 94.2 | 86.9 | 12.3 | 64.7 | 22.6 | 12.1 | 0.6 |
| Comparative Example 5 | 91.8 | 86.4 | 12.6 | 66.6 | 18.5 | 14.5 | 0.4 |

### INDUSTRIAL APPLICABILITY

The present disclosure is useful for a method for producing water gas from polyhydric alcohol and water.

### DESCRIPTION OF REFERENCE CHARACTERS

- 10: reaction device
- 11: material feeding part
- 12: material feeding pump
- 13: preheater
- 14: reactor
- 14a: reaction zone
- 15: cooler
- 16: heater
- 17: product collecting part
- 18: catalyst

## Claims

1. A method for producing water gas from polyhydric alcohol and water, wherein
a reaction fluid containing polyhydric alcohol and water is caused to flow in a reaction zone provided with a catalyst having a surface extending in a flow direction of the reaction fluid, at an average flow velocity of 0.05 m/s or more in a reaction time of 1.0 second or more.

2. The method of claim 1, wherein
the polyhydric alcohol is glycerin.

3. The method of claim 1 or 2, wherein
the catalyst contains at least one of Group 8-10 metals.

4. The method of any one of claims 1 to 3, wherein
an effective passage cross-sectional area of the reaction zone except for an area occupied by the catalyst is 200 to 25000000 mm², and a passage length is 0.5 to 100 m.

5. The method of any one of claims 1 to 4, wherein
a Reynolds number of the reaction fluid in the reaction zone is 5 to 100000.
